# EUROPEAN PATENT APPLICATION

(11) **EP 4 734 267 A1**
(43) Date of publication of application: **29.04.2026**
(21) Application number: 25210570.5
(22) Date of filing: 22.10.2025
(51) Int. Cl.: H01M 50/528, H01M 50/533, H01M 50/538, H01M 50/54, H01M 50/536

(54) **CURRENT COLLECTOR, BATTERY CELL INCLUDING THE SAME, AND METHOD OF MANUFACTURING THE SAME**

(30) Priority: 23.10.2024 KR 20240146043; 28.04.2025 KR 20250055432
(71) Applicant: SK On Co., Ltd., Seoul 03161 (KR)
(72) Inventor: KWAK, Seung Ho, 34124 Daejeon (KR); JU, Seung Hoon, 34124 Daejeon (KR); PARK, Seong Che, 34124 Daejeon (KR); CHEONG, Hoemin, 34124 Daejeon (KR)
(74) Representative: Stolmár & Partner Patentanwälte PartG mbB

(57) **Abstract**

A battery cell includes an electrode assembly including an electrode tab, a cell case accommodating the electrode assembly, a cap plate coupled to the cell case, an electrode terminal disposed on the cap plate, and a current collector including a terminal connection portion electrically connected to the electrode terminal and a tab connection portion electrically connected to the electrode tab. The tab connection portion includes a step portion recessed toward the electrode assembly, and the electrode tab is bent to cover an outer surface of the step portion and then welded to the step portion on the outer surface of the step portion.

## Description

### TECHNICAL FIELD

The embodiments of the present disclosure generally relate to a current collector for a secondary battery cell capable of being charged and discharged, a battery cell including the same, and a method of manufacturing the battery cell.

### BACKGROUND

Secondary battery cells, unlike primary batteries, offer the convenience of rechargeability, and are therefore attracting much attention as power sources for various mobile devices, electric vehicles, energy storage devices, and the like.

Secondary battery cells may be manufactured as pouch-type or can-type cells. Pouch-type cells house the electrode assembly within a flexible cell case (pouch). Can-type cells house the electrode assembly within a rigid cell case (can) and may be configured in cylindrical, prismatic, coin-shaped cells, or the like.

### SUMMARY

A battery cell includes an electrode assembly including electrode tabs, a cell case housing the electrode assembly, a cap plate coupled to the cell case, electrode terminals disposed on the cap plate, and a current collector electrically connecting the electrode assembly to the electrode terminals. The electrode assembly may include multiple sub-electrode assemblies.

When the electrode tabs and electrode terminals of the electrode assembly are disposed so that they face each other, the current collector may be welded to the electrode tabs of the multiple sub-electrode assemblies while the multiple sub-electrode assemblies are unfolded, and then the current collector may be welded to the electrode terminals disposed on the cap plate. After disposing an insulator on the surface of the current collector coupled to the cap plate, a process may be performed to fold the sub-electrode assembly in an unfolded state so that the sub-electrode assemblies are in a stacked state. Battery cells with this structure have a complex assembly process, and due to frequent changes in the position and orientation of the electrode assemblies during the assembly process, the alignment of the electrode assemblies may be easily misaligned. Consequently, the defect rate of the battery cell may be high.

Moreover, when the electrode tabs and electrode terminals of the electrode assembly are disposed in different directions, the current collector may be welded to the electrode tabs of the electrode assembly while the current collector is welded to the electrode terminals disposed on the cap plate. When welding the current collector and electrode tabs using ultrasonic welding, foreign matter generated during the ultrasonic welding may adhere to the electrode assembly and the current collector, potentially causing battery cell defects. Furthermore, since ultrasonic welding should be performed with the contact surfaces of the electrode tabs and the current collector upright, the energy density of the battery cell may be low.

Conversely, when welding the current collector and the electrode tabs using laser welding, the laser welding heat may damage the electrode assembly, potentially leading to a short circuit in the electrode assembly.

The disclosed technology can be implemented in some embodiments to provide a current collector capable of increasing internal space efficiency of a battery cell, a battery cell including the same, and a method of manufacturing the battery cell.

In the embodiments of the present disclosure, a current collector by which damage to the electrode assembly due to welding heat may be reduced or limited, a battery cell including the same, and a method of manufacturing the same may be provided.

In the embodiments of the present disclosure, a current collector capable of improving rigidity, a battery cell including the same, and a method of manufacturing the same may be provided.

In the embodiments of the present disclosure, a current collector capable of safely and securely connecting an electrode assembly and a current collector, a battery cell including the same, and a method of manufacturing the same may be provided.

A current collector and a battery cell in the embodiments of the present disclosure may be widely applied to devices within green technology fields such as electric vehicles, battery charging stations, and other battery-powered solar and wind power generation. Furthermore, the current collector and the battery cell in the embodiments of the present disclosure may be used in eco-friendly electric vehicles, hybrid vehicles, and other vehicles that aim to prevent climate change by reducing air pollution and greenhouse gas emissions.

In some embodiments of the present disclosure, a battery cell includes an electrode assembly including an electrode tab; a cell case accommodating the electrode assembly; a cap plate coupled to the cell case; an electrode terminal disposed on the cap plate; and a current collector including a terminal connection portion electrically connected to the electrode terminal and a tab connection portion electrically connected to the electrode tab. The tab connection portion includes a step portion recessed toward the electrode assembly, and the electrode tab is bent to cover an outer surface of the step portion and then welded to the step portion on the outer surface of the step portion.

In an embodiment, a recess depth of the step portion may be greater than or equal to a thickness of the electrode tab coupled to the step portion.

In an embodiment, the step portion may have a recessed shape in a remaining edge portion except for one edge at which the electrode tab is bent.

In an embodiment, the tab connection portion may have a capital letter I shape, excluding the step portion.

In an embodiment, the tab connection portion may include a first portion connected to the terminal connection portion and a second portion extending from the first portion and including the step portion, and a width of the second portion may be thinner than a maximum width of the first portion, based on a thickness direction of the electrode assembly.

In an embodiment, the second portion may include a boundary crossing the second portion in a first direction, and an extension end portion extending from the step portion and the boundary in the first direction, and the step portion may have a recessed shape recessed from the first portion, the boundary, and the extension end portion.

In an embodiment, the electrode tab may be disposed on a side surface of the electrode assembly, the electrode terminal may be disposed on an upper side of the electrode assembly, and the tab connection portion may have a shape bent from the terminal connection portion.

In an embodiment, the cap plate, the electrode terminal, and the current collector may be coupled to each other and provided as a cap assembly, and the current collector may be welded to the electrode assembly while being coupled to the cap plate.

In an embodiment, the electrode assembly may include a first sub-electrode assembly including a first electrode tab and a second sub-electrode assembly including a second electrode tab, the step portion of the current collector may include a first step portion to which the first electrode tab is coupled and a second step portion to which the second electrode tab is coupled, and the tab connection portion may further include a boundary crossing between the first step portion and the second step portion.

In an embodiment, a recess depth of the first step portion from the boundary of the step portion may be greater than or equal to a thickness of the first electrode tab, and a recess depth of the second step portion from the boundary of the step portion may be greater than or equal to a thickness of the second electrode tab.

In an embodiment, the tab connection portion may include a first portion connected to the terminal connection portion, and a second portion extending from the first portion and including the step portion, and a width of the second portion may have a value less than or equal to a distance between a portion at which the first electrode tab is bent and a portion at which the second electrode tab is bent, based on a thickness direction of the electrode assembly.

In some embodiments of the present disclosure, a current collector includes a terminal connection portion electrically connected to an electrode terminal; and a tab connection portion having a bent shape from the terminal connection portion and electrically connected to an electrode tab of an electrode assembly. The tab connection portion includes a step portion recessed inwardly.

In an embodiment, the tab connection portion may include a first portion connected to the terminal connection portion, and a second portion extending from the first portion and including the step portion, and a width of the second portion may be thinner than a maximum width of the first portion.

In an embodiment, the second portion may include a boundary crossing the second portion in a first direction, and an extension end portion extending from the step portion and the boundary in the first direction, and the step portion may have a recessed shape recessed from the first portion, the boundary, and the extension end portion.

In some embodiments of the present disclosure, a method of manufacturing a battery cell includes preparing an electrode assembly including an electrode tab; preparing a cap assembly including a cap plate, an electrode terminal disposed on the cap plate, and a current collector electrically connected to the electrode terminal; and coupling the electrode tab of the electrode assembly to the current collector of the cap assembly. In preparing the cap assembly, the current collector includes a terminal connection portion electrically connected to the electrode terminal and a tab connection portion electrically connected to the electrode tab and having a step portion recessed toward the electrode assembly. Coupling the electrode tab to the current collector includes bending the electrode tab to cover an outer surface of the step portion, and welding the electrode tab to the step portion on the outer surface of the step portion.

In an embodiment, in preparing the cap assembly, a recess depth of the step portion may be set to have a value greater than or equal to a thickness of the electrode tab coupled to the step portion.

In an embodiment, preparing the electrode assembly may include preparing a first sub-electrode assembly including a first electrode tab and a second sub-electrode assembly including a second electrode tab, and stacking and coupling the first sub-electrode assembly and the second sub-electrode assembly, and coupling the electrode tab to the current collector may further include disposing the tab connection portion in a space between the first electrode tab and the second electrode tab.

In an embodiment, preparing the electrode assembly may be performed such that the first electrode tab has a shape converging in a central region of the first sub-electrode assembly and the second electrode tab has a shape converging in a central region of the second sub-electrode assembly, based on a thickness direction of the electrode assembly.

In some embodiments of the present disclosure, a battery cell includes an electrode assembly disposed within a cell case and including an electrode tab disposed on a lateral side of the cell case; an electrode terminal disposed on an upper side the cell case; and a current collector having an L shape with a substantially horizontal portion of the L-shaped current collector electrically connecting the current collector to the electrode terminal, and a substantially vertical portion of the L-shaped current collector electrically connecting the current collector to the electrode tab. The electrode tab is an anode tab or a cathode electrode tab.

In an embodiment, the substantially vertical portion of the L-shaped current collector includes a step portion recessed toward the electrode assembly, and the electrode tab is bent to cover an outer surface of the step portion and then welded to the step portion on the outer surface of the step portion.

### BRIEF DESCRIPTION OF DRAWINGS

Certain aspects, features, and advantages of the embodiments of the present disclosure are illustrated by the following detailed description with reference to the accompanying drawings.
FIG. 1 is a perspective view illustrating a battery cell according to an embodiment of the present disclosure.
FIG. 2 is an exploded perspective view of the battery cell illustrated in FIG. 1.
FIG. 3 is a perspective view illustrating a cap assembly illustrated in FIG. 2.
FIG. 4 is an exploded perspective view of the cap assembly illustrated in FIG. 3.
FIG. 5 is a perspective view illustrating a current collector according to an embodiment of the present disclosure.
FIG. 6 is a perspective view illustrating a process of coupling a current collector to an electrode tab of an electrode assembly according to an embodiment of the present disclosure.
FIG. 7 is an enlarged perspective view illustrating a state in which a current collector is coupled to an electrode tab of an electrode assembly according to an embodiment of the present disclosure.
FIG. 8 is a side view illustrating a state in which a cap assembly is coupled to an electrode assembly according to an embodiment of the present disclosure.
FIG. 9 is a cross-sectional view taken along line I-I' of FIG. 8.
FIGS. 10A, 10B, 10C, 10D, 10E and 10F are schematic diagrams sequentially illustrating a process of forming an electrode assembly and a process of coupling a cap assembly to the electrode assembly according to an embodiment of the present disclosure.
FIG. 11 is a perspective view illustrating a battery device according to an embodiment of the present disclosure.

### DETAILED DESCRIPTION

Features of the embodiments of the present disclosure are described with reference to the accompanying drawings.

However, the disclosed technology is not limited to the detailed embodiments described herein.

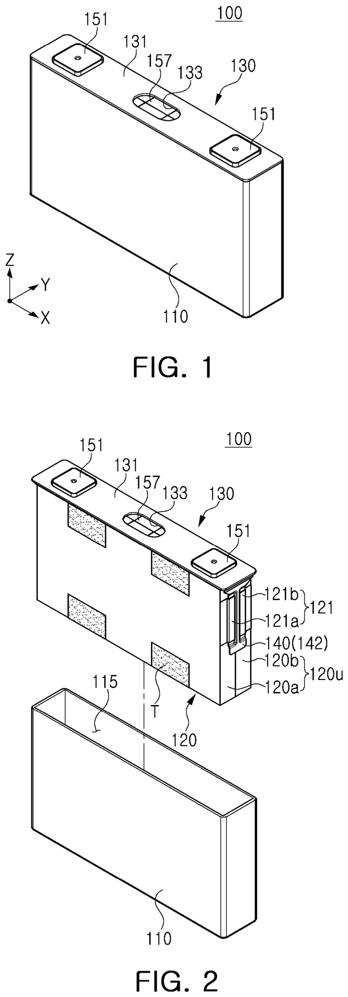

First, a battery cell 100 in an embodiment will be described with reference to FIGS. 1 through 4.

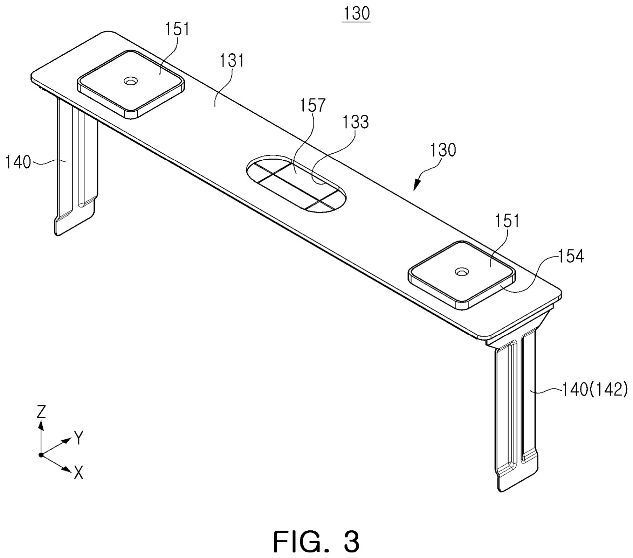

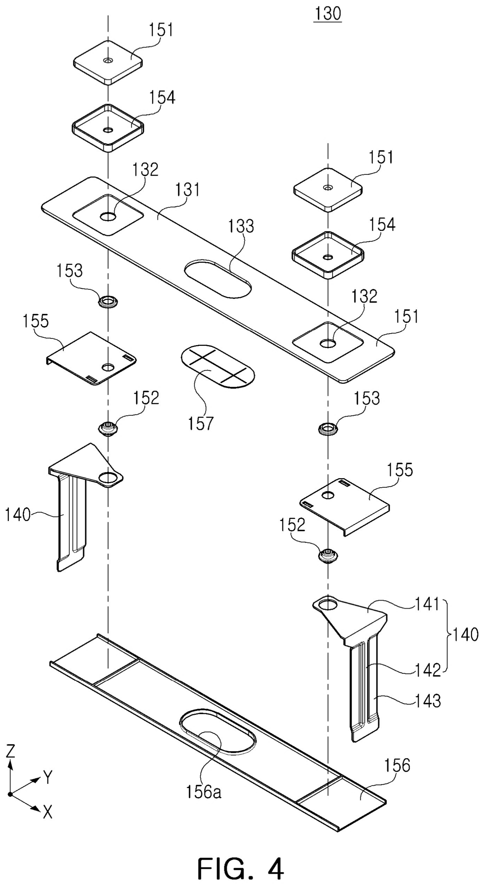

FIG. 1 is a perspective view illustrating a battery cell 100 according to an embodiment of the present disclosure. FIG. 2 is an exploded perspective view of the battery cell 100 illustrated in FIG. 1. FIG. 3 is a perspective view illustrating a cap assembly 130 illustrated in FIG. 2. FIG. 4 is an exploded perspective view of the cap assembly 130 illustrated in FIG. 3.

Referring to FIGS. 1 through 4, a battery cell 100 in an embodiment may include an electrode assembly 120, a cell case 110, a cap plate 131, an electrode terminal 151, and a current collector 140. While the disclosed technology uses a prismatic battery cell 100 in an embodiment, the form of the battery cell 100 to which the disclosed technology may be applied is not limited thereto.

The electrode assembly 120 may include a cathode plate, an anode plate, and a separator. The cathode plate and the anode plate may be disposed within the cell case 11 with the separator interposed therebetween. In an embodiment, the electrode assembly 120 may have a winding structure in which the cathode plate, the anode plate, and the separator are wound. However, the electrode assembly 120 in an embodiment is not limited to the winding structure. For example, the electrode assembly 120 in an embodiment may also have a stack shape, a zigzag-folded shape, or a stack-folded shape.

The electrode assembly 120 may include an electrode tab 121. The electrode tab 121 may include a cathode tab connected to the cathode plate and an anode tab connected to the anode plate.

The electrode tab 121 may be disposed on the side surface of the electrode plate. For example, the electrode assembly 120 may include electrode tabs 121 disposed on both sides of the electrode assembly 120, respectively. The cathode tab may be disposed on one side of the electrode assembly 120, and the anode tab may be disposed on the other side of the electrode assembly 120. The cathode tab and the anode tab may be disposed on the electrode assembly 120 to face in opposite directions. However, the position of the electrode tab 121 in the embodiment is not limited thereto. For example, the electrode tab 121 may also include a cathode tab and an anode tab respectively disposed on the upper side of the electrode assembly 120.

The electrode assembly 120 may have a structure in which multiple sub-electrode assemblies 120u (120a, 120b) are coupled to each other. The electrode assembly 120 may include a first sub-electrode assembly 120a including a first electrode tab 121a and a second sub-electrode assembly 120b including a second electrode tab 121b. The first and second sub-electrode assemblies 120a and 120b may each include a cathode plate, an anode plate, and a separator. While FIG. 2 illustrates a case in which the electrode assembly 120 includes two sub-electrode assemblies 120u, the number of sub-electrode assemblies 120u provided in the electrode assembly 120 may vary, such as one, three, or more.

Each sub-electrode assembly 120u may include electrode tabs 121, for example, a cathode tab and an anode tab. The electrode tab 121 of the electrode assembly 120 may include a first electrode tab 121a provided on a first sub-electrode assembly 120a and a second electrode tab 121b provided on a second sub-electrode assembly 120b. The first electrode tab 121a and the second electrode tab 121b may be gathered together in the central region of each sub-electrode assembly 120u.

The first sub-electrode assembly 120a and the second sub-electrode assembly 120b may be coupled to each other by a fixing member (T) to form the electrode assembly 120. In an embodiment, the fixing member (T) may include a covering tape of the first sub-electrode assembly 120a and the second sub-electrode assembly 120b.

The cell case 110 may accommodate an electrode assembly 120. The cell case 110 has an accommodation space 115 for accommodating the electrode assembly 120 therein and may have a shape with at least one side open. For example, the cell case 110 may have a shape with an open upper side.

The accommodation space 115 of the cell case 110 may accommodate the electrode assembly 120 and an electrolyte. In an embodiment, the cell case 110 may have a hexahedral shape with one end open.

A cap plate 131 may be coupled to the cell case 110. The cap plate 131 may cover the open end of the cell case 110. For example, the cap plate 131 may cover the open upper end of the cell case 110.

The cap plate 131 may include a vent hole 133, and a vent cover 157 may be coupled to the vent hole 133. The vent cover 157 may be welded to the cap plate 131. The vent cover 157 may be broken or opened when gas is generated within the cell case 110 and the internal pressure of the cell case 110 increases. The vent cover 157 may function to discharge the gas within the cell case 110 to the outside of the cell case 110 when the internal pressure of the cell case 110 increases.

An electrode terminal 151 may be disposed on the cap plate 131. The electrode terminal 151 may be electrically connected to the electrode tab 121 of the electrode assembly 120 via a current collector 140. The electrode terminal 151 may include a cathode terminal and an anode terminal disposed on the cap plate 131. The cathode terminal may be electrically connected to the cathode tab of the electrode assembly 120, and the anode terminal may be electrically connected to the anode tab of the electrode assembly 120.

The current collector 140 may electrically connect the electrode tab 121 of the electrode assembly 120 to the electrode terminal 151. The current collector 140 may include a terminal connection portion 141 electrically connected to the electrode terminal 151 and a tab connection portion 142 electrically connected to the electrode tab 121.

When the electrode tabs 121 are positioned on both opposite lateral sides of the electrode assembly 120 and the electrode terminal 151 is positioned on the upper side of the electrode assembly 120, the current collector 140 may have a bent shape. For example, the terminal connection portion 141 and the tab connection portion 142 may have a shape that is bent relative to each other as illustrated for example in FIG. 4. The tab connection portion 142 may be bent approximately 90 degrees from the terminal connection portion 141. The current collector 140 may have a cross-sectional shape that is approximately "L" shaped to electrically connect the electrode tab 121 and the electrode terminal 151 respectively disposed on two sides of the electrode assembly 120.

The tab connection portion 142 of the current collector 140 may be coupled to the first electrode tab 121a of the first sub-electrode assembly 120a and the second electrode tab 121b of the second sub-electrode assembly 120b, respectively. The current collector 140 may electrically connect the first electrode tab 121a and the second electrode tab 121b to the electrode terminal 151. Hence, the current collector 140 may have an L shape with a substantially horizontal portion of the L-shaped current collector 140 (the terminal connection portion) electrically connecting the current collector 140 to the electrode terminal 151, and a substantially vertical portion of the L-shaped current collector 140 (the tab connection portion) electrically connecting the current collector 140 to the electrode tab 121a or 121b.

The cap plate 131, electrode terminal 151, and current collector 140 may be coupled to each other to provide a cap assembly 130. The current collector 140 may be welded to the electrode assembly 120 while coupled to the cap plate 131. For example, the current collector 140 may be coupled to the electrode assembly 120 while being provided as the cap assembly 130. The cap assembly 130 may be coupled to the electrode assembly 120 via the current collector 140.

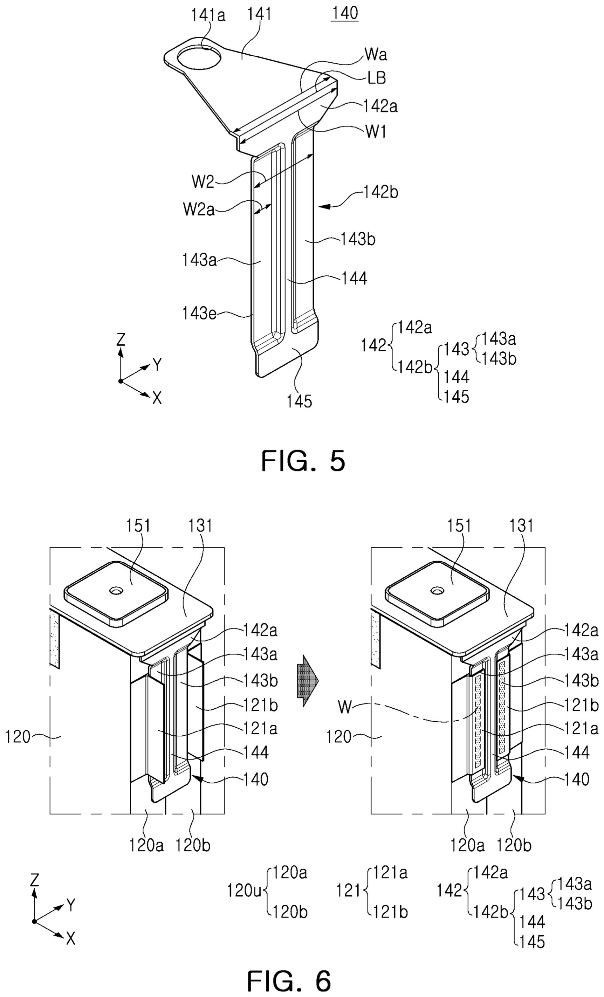

The cap assembly 130 may include a cap plate 131, an electrode terminal 151, and a current collector 140. The current collector 140 may be coupled to the electrode terminal 151 via a connection terminal 152. One side (lower side) of the connection terminal 152 is coupled to the coupling hole 141a (see FIG. 5) of the current collector 140, and the other side (upper side) of the connection terminal 152 may be coupled to the electrode terminal 151 after passing through the through-hole 132 of the cap plate 131. The connection terminal 152 may have a structure that rivets the electrode terminal 151 to the cap plate 131. In another embodiment, the connection terminal 152 may pass through the through-hole 132 of the cap plate 131 and a hole formed in the electrode terminal 151 and then welded to the electrode terminal 151. The structure for connecting the cap plate 131, the electrode terminal 151, and the current collector 140 to each other may be changed in various ways, such as fitting coupling, welding coupling, and rivet coupling (clinching). In addition, the electrode terminal 151 and the connection terminal 152 are not limited to the separate structure illustrated in FIG. 4, and the electrode terminal 151 and the connection terminal 152 may also have an integrated structure.

The cap assembly 130 may additionally include multiple insulators. The cap assembly 130 may include a first insulator 154 that electrically insulates the electrode terminal 151 from the cap plate 131, and a second insulator 155 that electrically insulates the cap plate 131 from the current collector 140. A third insulator 156 that electrically insulates the electrode assembly 120 from the current collector 140 and between the electrode assembly 120 and the cap plate 131 may be disposed beneath the current collector 140 or the cap plate 131.

The cap assembly 130 may additionally include a gasket 153 that seals the connection terminal 152 between the through-hole 132 formed in the cap plate 131.

In the disclosed technology, a structure is provided as an embodiment in which the cell case 110 has one end open, a single cap plate 131 coupled to the cell case 110, and an electrode terminal (cathode terminal and anode terminal) 151 is installed on the cap plate 131. However, the arrangement structure of the cell case 110, the cap plate 131, and the electrode terminal 151 is not limited thereto. For example, the cell case 110 may have a structure with both ends open and with cap plates 131 coupled to both ends, respectively, and a structure in which the cathode terminal and the anode terminal are disposed on respective cap plates 131.

Furthermore, the embodiments are not limited to a structure in which the cathode tab and the anode tab are disposed on both sides of the electrode assembly 120. A structure in which the cathode tab and the anode tab are respectively disposed on the upper side of the electrode assembly 120 is also possible. The current collector 140 may have various shapes depending on the position where the electrode tab 121 and electrode terminal 151 of the electrode assembly 120 are disposed. For example, in FIG. 4, the current collector 140 is illustrated as having an L-shaped bend. However, in the case in which the electrode tab 121 and electrode terminal 151 of the electrode assembly 120 are disposed facing each other, the current collector 140 may have an unbendable shape.

Referring to FIGS. 5 to 9, a battery cell 100 and a current collector 140 provided therein in an embodiment will be described.

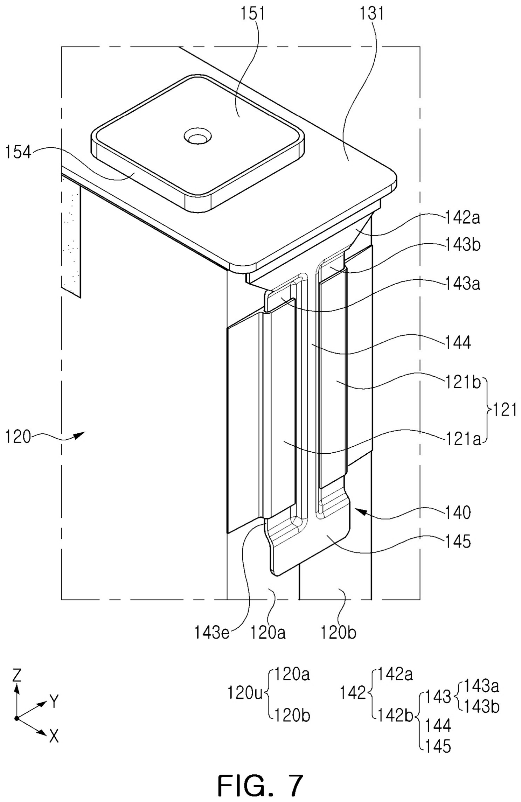

FIG. 5 is a perspective view illustrating a current collector 140 according to an embodiment of the present disclosure. FIG. 6 is a perspective view illustrating the process of coupling the current collector 140 to the electrode tab 121 of the electrode assembly 120 according to an embodiment of the present disclosure. FIG. 7 is an enlarged perspective view illustrating a current collector 140 coupled to an electrode tab 121 of an electrode assembly 120 according to an embodiment of the present disclosure.

Referring to FIGS. 5 to 7 along with FIG. 2, the current collector 140 may electrically connect the electrode tab 121 of the electrode assembly 120 to an electrode terminal 151. The current collector 140 may include a terminal connection portion 141 electrically connected to the electrode terminal 151 and a tab connection portion 142 electrically connected to the electrode tab 121.

The tab connection portion 142 may include a step portion 143 recessed toward the electrode assembly 120. The electrode tab 121 may be coupled to the step portion 143 of the tab connection portion 142.

The step portion 143 may be formed by forming the tab connection portion 142 of the current collector 140. The step portion 143 may improve the rigidity of the current collector 140. The step portion 143 may prevent the electrode tab 121 from protruding beyond the outer surface of the current collector 140 when the electrode tab 121 is welded to the step portion 143. Accordingly, the step portion 143 may increase the internal space efficiency of the battery cell 100. By forming the step portion 143 on the current collector 140 and coupling the electrode tab 121 to the outer surface of the step portion 143, the energy density of the battery cell 100 may be improved.

The electrode tab 121 may be bent to cover the outer surface of the step portion 143 and then welded to the step portion 143 from the outer surface of the step portion 143.

The electrode tab 121 may be laser welded while positioned over and covering the outer surface of the current collector 140. The electrode tabs 121 are first gathered at the central region of each sub-electrode assembly 120u, and then bent outward along the outer edge of the step portion 143 so that they make contact with the outer surface of the step portion 143. Following the bending operation, the bent electrode tab 121 may be welded to the step portion 143 of the tab connection portion 142. After being bent, the electrode tab 121 may be laser welded to the step portion 143 of the current collector 140. The weld region (W) formed through welding between the electrode tab 121 and the step portion 143 may be formed as a line (also referred to as a linear weld) in the first direction, e.g., the Z direction. However, the shape of the weld region (W) is not limited to this embodiment and may be variously modified.

Since laser welding is performed while the electrode tab 121 covers the outer surface of the step portion 143, the laser may be irradiated to the electrode tab 121. The laser welding heat melts the contact area of the electrode tab 121 and the step portion 143, and thus the electrode tab 121 and the step portion 143 may be welded. If the welding position between the electrode tab 121 of the electrode assembly 120 and the current collector 140 is located on the outer surface of the current collector 140, the irradiated laser may first melt the electrode tab 121 of the electrode assembly 120 and then melt the current collector 140, so that the electrode tab 121 and the current collector 140 may be joined. In this case, the welding heat input for melting the electrode tab 121 may be reduced. When the electrode tab 121 is welded to the outer surface of the step portion 143, the welding heat input may be small, and thus damage to the electrode assembly 120 due to the welding heat may be significantly reduced.

On the other hand, when the laser is irradiated to the current collector 140 while the current collector 140 covers the electrode tab 121 as in the prior art, the laser is irradiated to the current collector 140, so the heat input should be large for the melting of the electrode tab 121. Therefore, in the prior art, the separator may melt due to the welding heat during the melting process of the current collector 140 and the electrode tab 121, and thus a short circuit may occur in the electrode assembly 120.

As illustrated in FIG. 2, when the electrode tab 121 is disposed on the side surface of the electrode assembly 120 and the electrode terminal 151 is disposed on the upper side of the electrode assembly 120, the tab connection portion 142 may have a shape bent from the terminal connection portion 141. The tab connection portion 142 may have a shape bent at approximately 90 degrees from the terminal connection portion 141. The current collector 140 may have an approximately 'L'-shaped cross-section to electrically connect the electrode tabs 121 respectively disposed on both sides of the electrode assembly 120 to the electrode terminals 151 disposed on the upper side of the electrode assembly 120.

The step portion 143 may be connected to the electrode tabs 121 of multiple sub-electrode assemblies 120u. The electrode assembly 120 may include a first sub-electrode assembly 120a including a first electrode tab 121a and a second sub-electrode assembly 120b including a second electrode tab 121b. The step portion 143 of the current collector 140 may include a first step portion 143a to which the first electrode tab 121a is coupled and a second step portion 143b to which the second electrode tab 121b is coupled. The tab connection portion 142 may additionally include a boundary 144 crossing the first step portion 143a and the second step portion 143b. The boundary 144 may serve as a bridge connecting the first and second step portions 143a and 143b. The boundary 144 (also referred to as bridge portion) may have a curved shape bulging away from the outer surface of the first and second sub-electrode assemblies 120a and 120b.

The first step portion 143a and the second step portion 143b may have a recessed shape relative to the boundary 144. The first electrode tab 121a may be bent relative to the outer edge of the first step portion 143a and then welded to the first step portion 143a, while the second electrode tab 121b may be bent relative to the outer edge of the second step portion 143b and then welded to the second step portion 143b. The first electrode tab 121a welded to the first step portion 143a and the second electrode tab 121b welded to the second step portion 143b may not protrude beyond the outer surface of the boundary 144.

The tab connection portion 142 may include a first portion 142a connected to the terminal connection portion 141, and a second portion 142b extending from the first portion 142a and including the step portion 143.

The first portion 142a of the tab connection portion 142 is connected to the terminal connection portion 141 and is a portion bent in a first direction (e.g., Z direction) from the terminal connection portion 141. The second portion 142b of the tab connection portion 142 is a portion extending in the first direction (e.g., Z direction) from the first portion 142a and may be defined as an area including the step portion 143. A width W2 of the second portion 142b may have a value less than the width of the boundary (LB) between the tab connection portion 142 and the terminal connection portion 141. The width W2 of the second portion 142b may have a value less than a maximum width W1 of the first portion. The width (Wa) of the terminal connection portion 141 at the boundary (LB) between the tab connection portion 142 and the terminal connection portion 141 may have a value substantially equal to the maximum width W1 of the first portion.

The second portion 142b may include a boundary 144 crossing the second portion 142b in a first direction (e.g., Z direction), a step portion 143, and an extension end portion 145 extending from the boundary 144 in the first direction (e.g., Z direction). The step portion 143 may have a recessed shape from the first portion 142a, the boundary 144, and the extension end portion 145. The step portion 143 may include a first step portion 143a and a second step portion 143b. The width W2a of the first step portion 143a and the second step portion 143b may correspond to the width of the recessed portion. The second portion 142b may include a boundary 144 crossing the first step portion 143a and the second step portion 143b in the first direction (e.g., Z direction). The second portion 142b may additionally include an extension end portion 145 below the step portion 143.

The step portion 143 may have a shape in which the remaining edge portion, except for one edge 143e at which the electrode tab 121 is bent, is recessed. The electrode tab 121 may be bent based on one edge (outer) of the step portion 143. When the surface of the step portion 143 has a roughly quadrangular shape, the step portion 143 has a recessed shape from the first portion 142a, the boundary 144, and the extension end portion 145. The outer edge 143e, which serves as a reference for the bending of the electrode tab 121, may have a recessed surface identical to the portion with which the electrode tab 121 contacts. When three sides among edges of the step portion 143 have a recessed shape, the rigidity of the current collector 140 may be improved.

The tab connection portion 142 may have a capital I-shaped shape, excluding the step portion 143. The tab connection portion 142 may have an overall capital I-shaped shape due to the first portion 142a, the boundary 144, and the extension end portion 145. For example, in the tab connection portion 142 of a roughly rectangular shape, the first step portion 143a and the second step portion 143b are recessed, and the remaining portion that is not recessed may have an I-like shape. By forming the current collector 140 to have this shape, the rigidity of the current collector 140 may be improved.

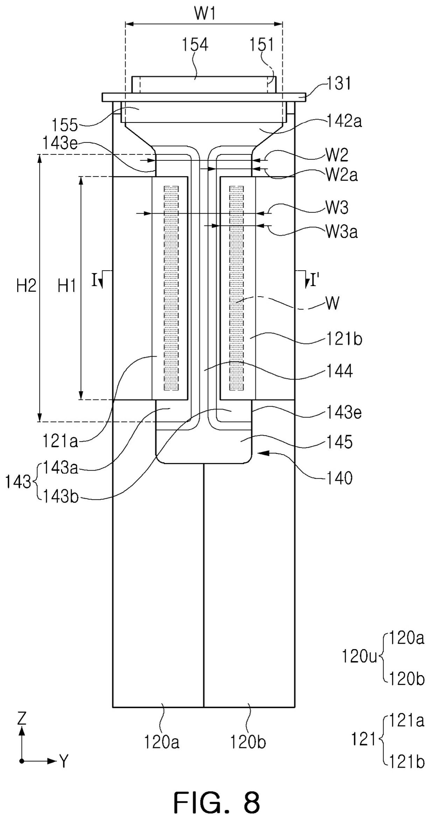

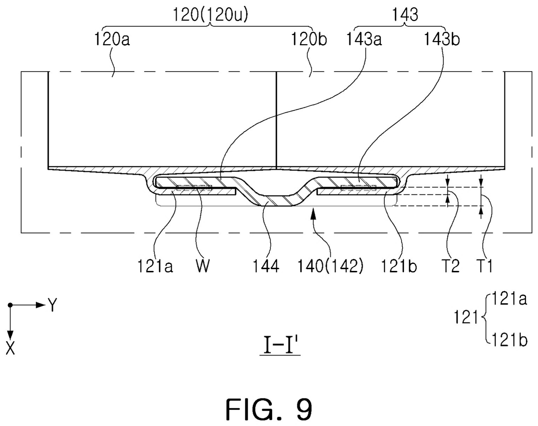

FIG. 8 is a side view illustrating a state in which a cap assembly 130 is coupled to an electrode assembly 120 according to an embodiment of the present disclosure. FIG. 9 is a cross-sectional view taken along line I-I' of FIG. 8. FIG. 8 illustrates a state in which a tab connection portion 142 and an electrode tab 121 are welded to form a weld region (W).

The tab connection portion 142 may include a first portion 142a connected to the terminal connection portion 141, and a second portion 142b extending from the first portion 142a and including a step portion 143. Based on the thickness direction (e.g., Y direction) of the electrode assembly 120, the width W2 of the second portion 142b may have a smaller value than the maximum width W1 of the first portion 142a. The maximum width W1 of the first portion 142a may be the width of the first portion 142a at the boundary between the first portion 142a and the second portion 142b. The width of the first portion 142a may gradually decrease toward the second portion 142b. For example, the first portion 142a may have a shape in which the width decreases.

When the width W2 of the second portion 142b is thinner than the maximum width W1 of the first portion 142a, the electrode tabs 121 may be gathered at the central region of each sub-electrode assembly 120u. For example, the electrode tabs 121 may be gathered at the central region located approximately 1/3 to 2/3 times the thickness of the sub-electrode assembly 120u from one end thereof in the thickness direction (e.g., Y direction) of the sub-electrode assembly 120u. A phenomenon in which the length of the electrode tab 121 extending from one side of the sub-electrode assembly 120u may be prevented from becoming excessively longer than the length of the electrode tab 121 extending from the other side.

Based on the thickness direction (e.g., Y direction) of the electrode assembly 120, the width W2 of the second portion 142b may have a value less than or equal to the distance W3 between the portion at which the first electrode tab 121a is bent and the portion at which the second electrode tab 121b is bent. Accordingly, the second portion 142b of the current collector 140 may be disposed between the first electrode tab 121a of the first sub-electrode assembly 120a and the second electrode tab 121b of the second sub-electrode assembly 120b. The first electrode tab 121a may be bent based on the outer edge 143e of the first step portion 143a and then welded to the first step portion 143a to form a weld region (W). The second electrode tab 121b may be bent based on the outer edge 143e of the second step portion 143b and then welded to the second step portion 143b to form a weld region (W). The width W3a of each of the first step portion 143a and the second step portion 143b may be set to a size such that the first electrode tab 121a and the second electrode tab 121b do not go beyond the first step portion 143a and the second step portion 143b (for example, do not contact the boundary). Accordingly, when the electrode tab 121 is welded to the step portion 143, the electrode tab 121 may be prevented from protruding beyond the outer edge of the current collector 140.

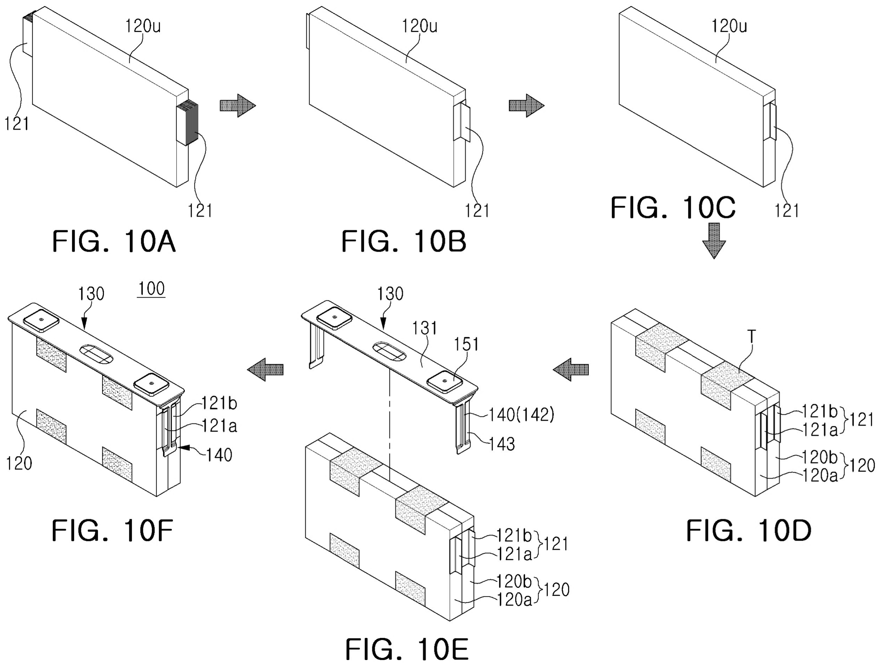

The first electrode tab 121a and the second electrode tab 121b may be pre-cut so that the width (length) W3a of the bent portion does not extend beyond the first step portion 143a and the second step portion 143b (see FIG. 10C).

With respect to the first direction (e.g., Z direction), the height H2 of the step portion 143 may be set to have a value greater than a value of the height H1 of the electrode tab 121. Accordingly, when the electrode tab 121 contacts the step portion 143, the electrode tab 121 may not contact the portion beyond the step portion 143. For example, the electrode tab 121 may not contact the first portion 142a and/or the extension end portion 145. Accordingly, when the electrode tab 121 is welded to the step portion 143, the electrode tab 121 may not protrude beyond the outer surface of the current collector 140.

The recess depth T1 of the step portion 143 may have a value greater than or equal to the thickness T2 of the electrode tab 121 coupled to the step portion 143. In this case, when the electrode tab 121 is welded to the step portion 143, the electrode tab 121 may be prevented from protruding beyond the outer surface of the current collector 140. Consequently, the internal space efficiency of the battery cell 100 may be improved. The energy density of the battery cell 100 may be improved by forming a step portion 143 in the current collector 140 and coupling an electrode tab 121 to the outer surface of the step portion 143.

The recess depth T1 of the first step portion 143a from the boundary 144 of the step portion 143 may have a value greater than or equal to the thickness T2 of the first electrode tab 121a, and the recess depth T1 of the second step portion 143b from the boundary 144 of the step portion 143 may have a value greater than or equal to the thickness T2 of the second electrode tab 121b. The recess depth T1 of the step portion 143 may be defined as the height difference between the boundary 144 and the step portion 143.

FIGS. 10A, 10B, 10C, 10D, 10E and 10F are schematic diagrams sequentially illustrating a process for forming an electrode assembly 120 and a process for coupling a cap assembly 130 to the electrode assembly 120 according to an embodiment of the present disclosure.

A method of manufacturing a battery cell 100 in an embodiment will be described with reference to FIGS. 10A, 10B, 10C, 10D, 10E and 10F, along with FIGS. 2 through 9 .

A method of manufacturing a battery cell 100 in an embodiment may include an operation of preparing an electrode assembly 120 including an electrode tab 121, an operation of preparing a cap assembly 130 including a cap plate 131, an electrode terminal 151 disposed on the cap plate 131, and a current collector 140 electrically connected to the electrode terminal 151, and an operation of coupling the electrode tab 121 of the electrode assembly 120 to the current collector 140 of the cap assembly 130.

The description of the operation of preparing the electrode assembly 120 may be applied to the description of the electrode assembly 120 described with reference to FIGS. 1 to 9. For descriptions of the operation of preparing the cap assembly 130, the descriptions of the current collector 140, the cap plate 131, the cap assembly 130, and the like described with reference to FIGS. 1 to 9 may be applied. For descriptions of the operation of coupling the electrode tab 121 to the current collector 140, the description of the coupling structure of the current collector 140 and electrode tab 121 described with reference to FIGS. 1 to 9 may also be applied. Below, the main parts of a method of manufacturing the battery cell 100 will be outlined.

Referring to FIGS. 10A, 10B, 10C and 10D, the operation of preparing the electrode assembly 120 including the electrode tab 121 may include a process of preparing a sub-electrode assembly 120u.

Referring to FIG. 10A, the sub-electrode assembly 120u may have a shape in which the electrode tabs 121 extending from multiple electrode plates are not gathered together.

Referring to FIG. 10B, the electrode tabs 121 may be gathered approximately at the center of the sub-electrode assembly 120u along the thickness direction (e.g., Y direction). With the electrode tabs 121 gathered together, the electrode tabs 121 may be first welded. The first welding between the electrode tabs 121 may be performed using ultrasonic welding, but is not limited thereto.

Referring to FIG. 10C, the ends of the electrode tabs 121 in each sub-electrode assembly 120u may be cut to a predetermined length. Accordingly, the electrode tabs 121 may not contact the boundary 144 when they are bent outside the current collector 140 and coupled to the step portion 143.

Referring to FIG. 10D, the operation of preparing an electrode assembly 120 may include a process of preparing a first sub-electrode assembly 120a including a first electrode tab 121a and a second sub-electrode assembly 120b including a second electrode tab 121b, and a process of stacking and coupling the first sub-electrode assembly 120a and the second sub-electrode assembly 120b.

The first sub-electrode assembly 120a and the second sub-electrode assembly 120b may be coupled to each other by a fixing member (T) to form the electrode assembly 120. For example, the fixing member (T) may include a covering tape for the first sub-electrode assembly 120a and the second sub-electrode assembly 120b.

Referring to FIG. 10D, the operation of preparing the electrode assembly may be such that, based on the thickness direction (e.g., Y direction) of the electrode assembly 120, the first electrode tab 121a has a shape that is gathered in the central region of the first sub-electrode assembly 120a, and the second electrode tab 121b has a shape that is gathered in the central region of the second sub-electrode assembly 120b.

Referring to FIG. 10E along with FIG. 5 and FIG. 6, in the operation of preparing the cap assembly 130, the current collector 140 may include a terminal connection portion 141 electrically connected to the electrode terminal 151, and a tab connection portion 142 electrically connected to the electrode tab 121 and having a step portion 143 recessed toward the electrode assembly 120. The step portion 143 may be formed by forming the tab connection portion 142 of the current collector 140. The step portion 143 may improve the rigidity of the current collector 140. The step portion 143 may prevent the electrode tab 121 from protruding beyond the outer surface of the current collector 140 when the electrode tab 121 is welded to the step portion 143. Accordingly, the step portion 143 may increase the internal space efficiency of the battery cell 100. By forming the step portion 143 on the current collector 140 and coupling the electrode tab 121 to the outer surface of the step portion 143, the energy density of the battery cell 100 may be improved.

Referring to FIG. 9, in the operation of preparing the cap assembly 130, the recess depth T1 of the step portion 143 may be set to have a value greater than or equal to the thickness T2 of the electrode tab 121 that is coupled to the step portion 143. In this case, when the electrode tab 121 is welded to the step portion 143, the electrode tab 121 may be prevented from protruding beyond the outer surface of the current collector 140. Accordingly, the internal space efficiency of the battery cell 100 may be increased. The energy density of the battery cell 100 may be improved by forming a step portion 143 in the current collector 140 and coupling an electrode tab 121 to the outer surface of the step portion 143.

Referring to FIG. 10E and FIG. 6, the current collector 140 may be disposed at a position thereof coupled to the electrode tab 121 of the electrode assembly 120. The tab connection portion 142 of the current collector 140 may be disposed between the first electrode tab 121a and the second electrode tab 121b.

Referring to FIG. 10E and FIG. 6 together, the operation of coupling the electrode tab 121 to the current collector 140 may include a process of bending the electrode tab 121 to cover the outer surface of the step portion 143 and a process of welding the electrode tab 121 to the step portion 143 on the outer surface of the step portion 143.

The electrode tab 121 may be bent along the outer edge of the step portion 143 (143e of FIG. 7) and may contact the outer surface of the step portion 143. The bent electrode tab 121 may be welded to the step portion 143 of the tab connection portion 142. After being bent, the electrode tab 121 may be laser welded to the step portion 143 of the current collector 140. The weld region (W) (SEE FIG. 8) formed by welding between the electrode tab 121 and the step portion 143 may be formed as a line in the first direction (e.g., Z direction).

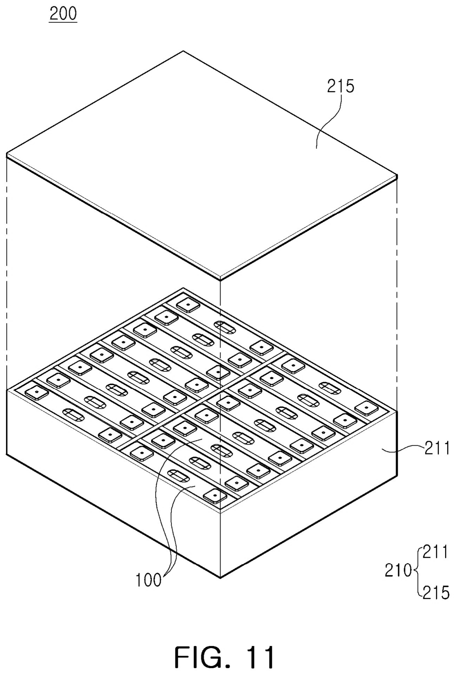

FIG. 11 is a perspective view illustrating a battery device according to an embodiment of the present disclosure.

Referring to FIG. 11, a battery device 200 in an embodiment may include a plurality of battery cells 100 and a housing 210 that accommodates the plurality of battery cells 100.

At least one of the plurality of battery cells 100 provided in the battery device 200 may be one of the battery cells 100 described with reference to FIGS. 1 to 9, and FIGS. 10A, 10B, 10C, 10D, 10E and 10F.

The detailed type of the battery device 200 in an embodiment is not limited, as long as it includes a plurality of battery cells 100. For example, the battery device 200 in an embodiment is defined as all including a battery module, a battery pack or an energy storage device, and the like.

The housing 210 may provide a space for accommodating a plurality of battery cells 100. The housing 210 may include a housing body 211 that forms a space for accommodating a plurality of battery cells 100, and a housing cover 215 that covers the upper side of the plurality of battery cells 100.

As set forth above, in an embodiment, the internal space efficiency of a battery cell may be increased.

In an embodiment, damage to an electrode assembly due to welding heat may be reduced or limited.

In an embodiment, the rigidity of a current collector may be improved.

In an embodiment, the connection between the electrode assembly and the current collector may be performed safely and securely.

Only specific implementations of certain embodiments are described. Variations, improvements and enhancements of the disclosed embodiments and other embodiments may be made based on the present disclosure by one of ordinary skill in the art. Furthermore, the embodiments may be combined to form additional embodiments.

## Claims

1. A battery cell comprising:
an electrode assembly including an electrode tab;
a cell case accommodating the electrode assembly;
a cap plate coupled to the cell case;
an electrode terminal disposed on the cap plate; and
a current collector including a terminal connection portion electrically connected to the electrode terminal and a tab connection portion electrically connected to the electrode tab,
wherein: the tab connection portion includes a step portion recessed toward the electrode assembly, and
the electrode tab is bent to cover an outer surface of the step portion and then welded to the step portion on the outer surface of the step portion.

2. The battery cell of claim 1, wherein a recess depth of the step portion is greater than or equal to a thickness of the electrode tab coupled to the step portion.

3. The battery cell of claim 1 or claim 2, wherein the step portion has a recessed shape in a remaining edge portion except for one edge where the electrode tab is bent.

4. The battery cell of any one of claims 1 to 3, wherein the tab connection portion has a capital letter I shape, excluding the step portion.

5. The battery cell of any one of claims 1 to 4, wherein: the tab connection portion includes a first portion connected to the terminal connection portion and a second portion extending from the first portion and including the step portion,
wherein a width of the second portion is thinner than a maximum width of the first portion, based on a thickness direction of the electrode assembly.

6. The battery cell of claim 5, wherein: the second portion includes a boundary crossing the second portion in a first direction, and an extension end portion extending from the step portion and the boundary in the first direction, and
the step portion has a recessed shape recessed from the first portion, the boundary, and the extension end portion.

7. The battery cell of any one of claims 1 to 6, wherein: the electrode tab is disposed on a side surface of the electrode assembly,
the electrode terminal is disposed on an upper side of the electrode assembly, and
the tab connection portion has a shape bent from the terminal connection portion.

8. The battery cell of any one of claims 1 to 7, wherein: the cap plate, the electrode terminal, and the current collector are coupled to each other and provided as a cap assembly, and
the current collector is welded to the electrode assembly while being coupled to the cap plate.

9. The battery cell of any one of claims 1 to 8, wherein: the electrode assembly includes a first sub-electrode assembly including a first electrode tab and a second sub-electrode assembly including a second electrode tab,
the step portion of the current collector includes a first step portion to which the first electrode tab is coupled and a second step portion to which the second electrode tab is coupled, and
the tab connection portion further includes a boundary crossing between the first step portion and the second step portion.

10. The battery cell of claim 9, wherein: the tab connection portion includes a first portion connected to the terminal connection portion, and a second portion extending from the first portion and including the step portion, and
a width of the second portion has a value less than or equal to a distance between a portion at which the first electrode tab is bent and a portion at which the second electrode tab is bent, based on a thickness direction of the electrode assembly.

11. A current collector comprising:
a terminal connection portion electrically connected to an electrode terminal; and
a tab connection portion having a bent shape from the terminal connection portion and electrically connected to an electrode tab of an electrode assembly,
wherein the tab connection portion includes a step portion recessed inwardly.

12. The current collector of claim 11, wherein the tab connection portion includes a first portion connected to the terminal connection portion, and a second portion extending from the first portion and including the step portion, and
wherein a width of the second portion is thinner than a maximum width of the first portion.

13. A method of manufacturing a battery cell, the method comprising:
preparing an electrode assembly including an electrode tab;
preparing a cap assembly including a cap plate, an electrode terminal disposed on the cap plate, and a current collector electrically connected to the electrode terminal; and
coupling the electrode tab of the electrode assembly to the current collector of the cap assembly,
wherein: in preparing the cap assembly, the current collector includes a terminal connection portion electrically connected to the electrode terminal and a tab connection portion electrically connected to the electrode tab and having a step portion recessed toward the electrode assembly; and
coupling the electrode tab to the current collector includes bending the electrode tab to cover an outer surface of the step portion, and welding the electrode tab to the step portion on the outer surface of the step portion.

14. The method of claim 13, wherein: preparing the electrode assembly includes preparing a first sub-electrode assembly including a first electrode tab and a second sub-electrode assembly including a second electrode tab, and stacking and coupling the first sub-electrode assembly and the second sub-electrode assembly, and
coupling the electrode tab to the current collector further includes disposing the tab connection portion in a space between the first electrode tab and the second electrode tab.

15. The method of claim 14, wherein preparing the electrode assembly is performed such that the first electrode tab has a shape converging in a central region of the first sub-electrode assembly and the second electrode tab has a shape converging in a central region of the second sub-electrode assembly, based on a thickness direction of the electrode assembly.
